# EUROPEAN PATENT APPLICATION

(11) **EP 3 339 072 A1**
(43) Date of publication of application: **27.06.2018**
(21) Application number: 16206037.0
(22) Date of filing: 22.12.2016
(51) Int. Cl.: B60K 13/02, B60K 1/04, B60K 1/00

(54) **AIR INTAKE SYSTEM**

(71) Applicant: Volvo Car Corporation, 40 531 Göteborg (SE)
(72) Inventor: Sjögren, Robert, 42355 Torslanda (SE); Forssell, Mr. Jonas, 42363 Torslanda (SE); Brunberg, Mr. Johan, 43160 Mölndal (SE); Nyberg, Henrik, 41766 Göteborg (SE); Nilsson, Erik, 41723 Göteborg (SE)
(74) Representative: Volvo Car Corporation

(57) **Abstract**

The invention concerns an air intake system (1) for an internal combustion engine (2), said system comprising an air intake duct (3, 4, 6) configured to transport combustion air to the internal combustion engine (2), and a compartment (5) configured to contain an electric component (9), wherein the system (1) is configured to allow combustion air to flow through the compartment (5) so as to provide air-cooling of the electric component (9). The compartment (5) is fluidly coupled in parallel to the air intake duct (4) via a first conduit (11) connected to the air intake duct (4) at a first connection position (11 a) and a second conduit (12) connected to the air intake duct (4) at a second connection position (12a), wherein the air intake duct (4) is configured to provide a difference in potential air pressure between said first and second connection positions (11 a, 12a) during operation of the internal combustion engine (2). The invention also concerns a vehicle provided with an air intake system of the above type.

## Description

### TECHNICAL FIELD

This invention relates to an air intake system for an internal combustion engine according to the preamble of claim 1. In particular, the invention relates to a system for cooling an electronic component using intake combustion air. The invention also relates to a vehicle provided with such an air intake system.

### BACKGROUND OF THE INVENTION

Hybrid driving systems for vehicles typically include an internal combustion engine and an electric motor that can be operated alternatively or complementary to each other. A battery, often of the lithium ion type, is used for powering the electric motor.

Following the development of hybrid systems the power of the electric motor increases as well as the usage of the batteries. In many applications it is now necessary to take measures to avoid overheating of the battery, in particular in applications where the battery is placed in the engine bay where the temperature is high.

Liquid based cooling systems are normally very effective but such systems are complicated to introduce into a vehicle and increase the cost.

Various battery cooling systems based on air-cooling have been proposed in the past. Systems based on an air flow created when the vehicle is moving are generally simple and easy to implement but require additional equipment, such as a fan, to provide cooling when the vehicle is stationary.

US5542489 discloses an arrangement for cooling (and heating) a vehicle battery where the battery is arranged in the air filter box of the main air intake duct of the internal combustion engine. An advantage of this arrangement compared to systems based on an air flow created when the vehicle is moving is that the air flow is available for cooling also when the vehicle is stationary (if the engine is running). However, drawbacks are that the battery brings about a significant pressure drop in the intake duct and that a complete re-design of an existing air intake system is required to implement the arrangement.

There is thus a need for improvements with regard to battery cooling systems, in particular for hybrid vehicles.

### SUMMARY OF THE INVENTION

An object of this invention is to provide a battery cooling system that provides for an efficient cooling and that does not exhibit the drawbacks of the conventional systems indicated above. This object is achieved by the air intake system defined by the technical features contained in independent claim 1. The dependent claims contain advantageous embodiments, further developments and variants of the invention.

The invention concerns an air intake system for an internal combustion engine, said system comprising: an air intake duct configured to transport combustion air to the internal combustion engine; and a compartment configured to contain an electric component, wherein the system is configured to allow combustion air to flow through the compartment so as to provide air-cooling of the electric component.

The invention is characterized in that the compartment is fluidly coupled in parallel to the air intake duct via a first conduit connected to the air intake duct at a first connection position and a second conduit connected to the air intake duct at a second connection position, wherein the air intake duct is configured to provide a difference in potential air pressure between said first and second connection positions during operation of the internal combustion engine.

Because of the difference in potential air pressure between the two connection points, a parallel partial flow of air will be created during operation of the engine, and this partial flow will flow through the two conduits and the compartment and provide air-cooling of the electric component placed in the compartment.

That the cooling part of the air flow system is fluidly coupled in parallel to the air intake duct means that the two conduits and the compartment forms a bypass flow, so the influence on the main flow of intake air (pressure drop etc.) can be made negligible. In contrast, US5542489 discloses a system where the compartment is arranged in series with the main intake flow and where the battery significantly blocks the flow of intake air.

In practice, all engine air intake systems exhibit significant differences in potential air pressure between different positions in the system during operation of the internal combustion engine. Typically, the intake systems include bends and an air filter box and the extreme points (with particularly high or low pressure) can be found close to or inside such parts.

The term combustion air relates to the intake air for the internal combustion process of the engine.

Positions in a particular intake system that exhibit a (sufficient) difference in potential air pressure during operation of the engine can be found by calculation (by computer-simulating the system) or by measurement (by placing pressure sensors in different positions), or by combining calculation and measurement. The principle of the inventive system can thus be applied to most if not all existing air intake systems; no extensive re-design would be needed to create a difference in potential pressure. Of course, measures might be taken, such as adjustments of some parts of the inner geometry of the intake system, to obtain a particular magnitude of the pressure difference or to locate the connection points at suitable positions along the intake duct.

The invention is thus based on the idea of making use of already existing pressure differences in the air intake system. The partial air flow through the conduits and the compartment can thereby be created "automatically". When the potential pressure is higher in the first connection point than in the second connection point, cooling air will flow from the first point via the first conduit, the compartment and the second conduit, towards the second point.

If the pressure is lower in the first connection point than in the second point, the cooling air will flow in the opposite direction. It is not necessary that cooling air always flows in the same direction so that one of the conduits always form an inlet for the cooling air and the other always form an outlet; the direction of the flow of cooling air may be reversed depending on the operation mode of the internal combustion engine. It is an advantage if the first and second connection positions are selected so that a significant flow of cooling air is created when the engine is idling, i.e. for the typical operation mode of the engine when the vehicle is stationary.

The first and second conduits and the compartment can be arranged in various ways depending on the particular application. For instance, the conduits may form relatively long pipes or simply form an opening between the intake duct and the compartment. Further, more than two conduits and/or two connection points may be used. To provide for efficient cooling, it is an advantage if the flow of cooling air entering the compartment is guided along or around the component to be cooled before it leaves the compartment.

The electronic component to be cooled is typically a battery but the inventive air intake system may also be used to cool other electronic components.

In an embodiment of the invention the first and second conduits and the compartment are configured to force a flow of cooling air to flow along and/or around the electric component when passing through the compartment on its way from the first conduit to the second conduit. This can be achieved by arranging air flow channels etc. in various ways and ensures that cooling of the electric component really can take effect. For instance, it is avoided that the cooling air simply flows from one conduit directly to the other conduit and back into the intake duct.

In an embodiment of the invention the air intake duct comprises an air filter box, wherein at least one of the first and second connection positions is located in association with said air filter box. An air filter box normally creates a distribution of the potential air pressure that is useful for the purpose of the arrangement described here, and in many applications it is simpler to connect the conduits to an air filter box than to other parts of the intake duct, such as pipes.

In an embodiment of the invention both the first and the second connection positions are located in association with said air filter box. In any case, it is often an advantage if both the first and the second connection positions are located at an upstream side of an air filter arranged in the air filter box. This way the flow of cooling air will be filtered after having left the compartment (i.e. the air cooling structure will be arranged on the unfiltered ("dirty") side of the intake system) and there is therefore not necessary to keep the compartment extremely clean.

In some applications it may be an advantage if both connection positions are located downstream the filter, i.e. on the clean side. This way the electronic component can be kept clean.

In an embodiment of the invention the air filter box has a cross sectional geometry that differs from that of the air intake duct upstream of the air filter box. This creates a variation in the distribution of the potential pressure in the combustion air which can be used for creating the cooling air flow.

In an embodiment of the invention the air intake duct comprises a bent part, wherein at least one of the first and the second connection positions is located in association with said bent part. Also bent parts create a variation in the distribution of the potential pressure in the combustion air which can be used for creating the cooling air flow.

In an embodiment of the invention the electric component is a battery, and preferably the battery is configured to power an electric motor capable of driving a vehicle. This is an application for which the inventive intake system is likely to be very useful.

The invention also concerns a vehicle provided with an air intake system of the above type. In an embodiment the vehicle comprises an internal combustion engine configured to drive the vehicle, wherein the air intake system is arranged to supply said internal combustion engine with combustion air. In a further embodiment the vehicle comprises an electric motor configured for alternative or complementing driving of the vehicle, wherein the electric component to be air-cooled is a battery for powering the electric motor.

### BRIEF DESCRIPTION OF DRAWINGS

In the description of the invention given below reference is made to the following figure, in which:
- Figure 1: shows, in a perspective view, an embodiment of an inventive air intake system arranged at an internal combustion engine,
- Figure 2: shows a perspective view of the air intake system according to figure 1,
- Figure 3: shows a partly sectional view of the system as shown in figure 2,
- Figure 4: shows another partly sectional view of the system as shown in figure 2,
- Figure 5: shows an exploded view of a component compartment of the air intake system according to figure 1,
- Figure 6: shows the compartment according to figure 5 in an assembled form,
- Figure 7: shows a sectional top view of the compartment according to figures 5 and 6, and
- Figure 8: illustrates schematically the distribution of potential pressure in an air filter box of the air intake system according to figure 1 during operation of the internal combustion engine.

### DESCRIPTION OF EXAMPLE EMBODIMENTS OF THE INVENTION

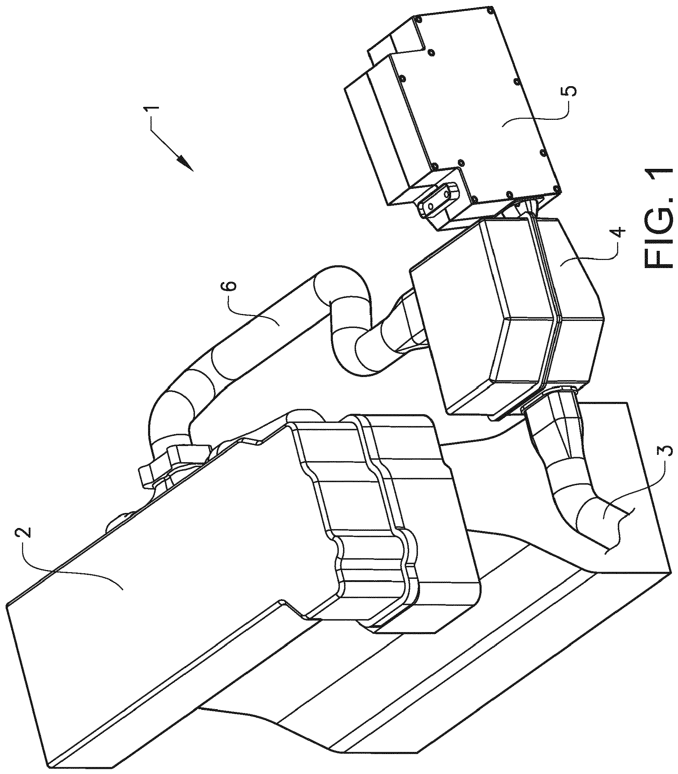

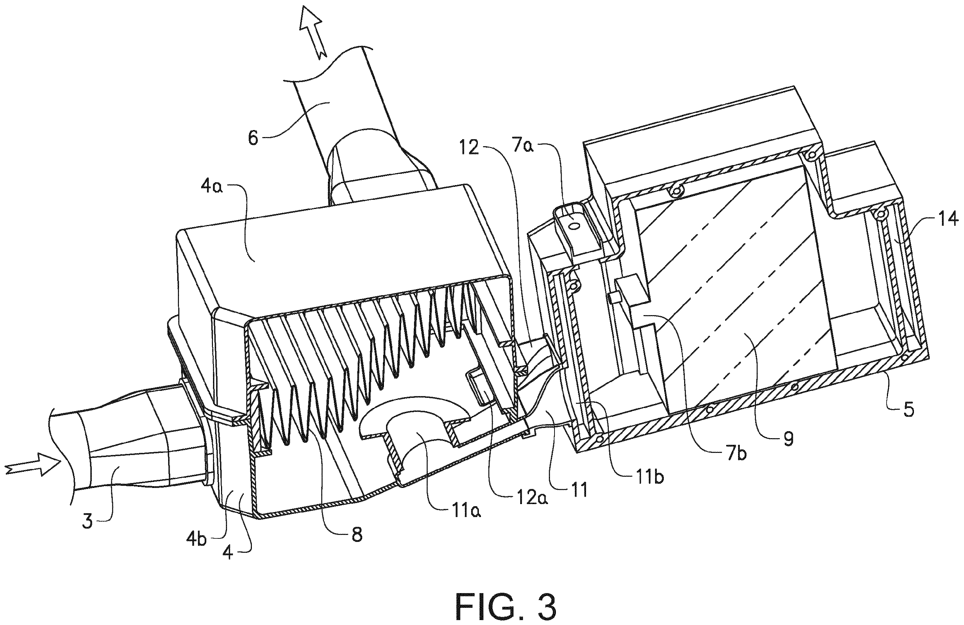

Figure 1 shows an air intake system 1 arranged at an internal combustion engine 2. As shown in figures 1-4, the intake system 1 comprises an air intake duct, in turn comprising in flow order a first pipe 3, an air filter box 4 and a second pipe 6, configured to transport combustion air to the internal combustion engine 2. The intake system further comprising a compartment 5 configured to contain an electric component, in this case a battery 9 (see figure 3).

The intake system 1 supplies the engine 2 with combustion air, i.e. intake air for the internal combustion process of the engine 2.

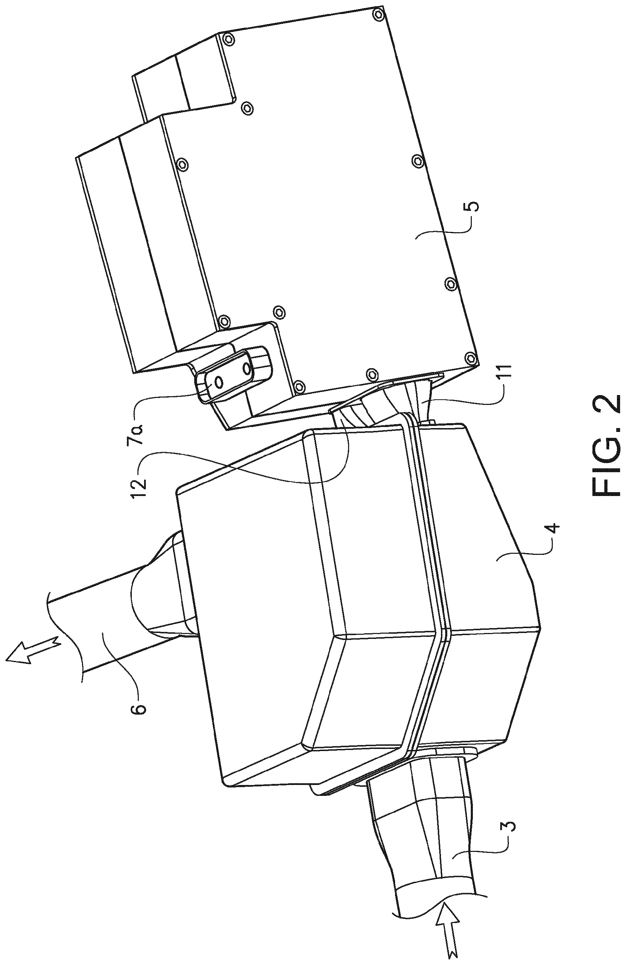

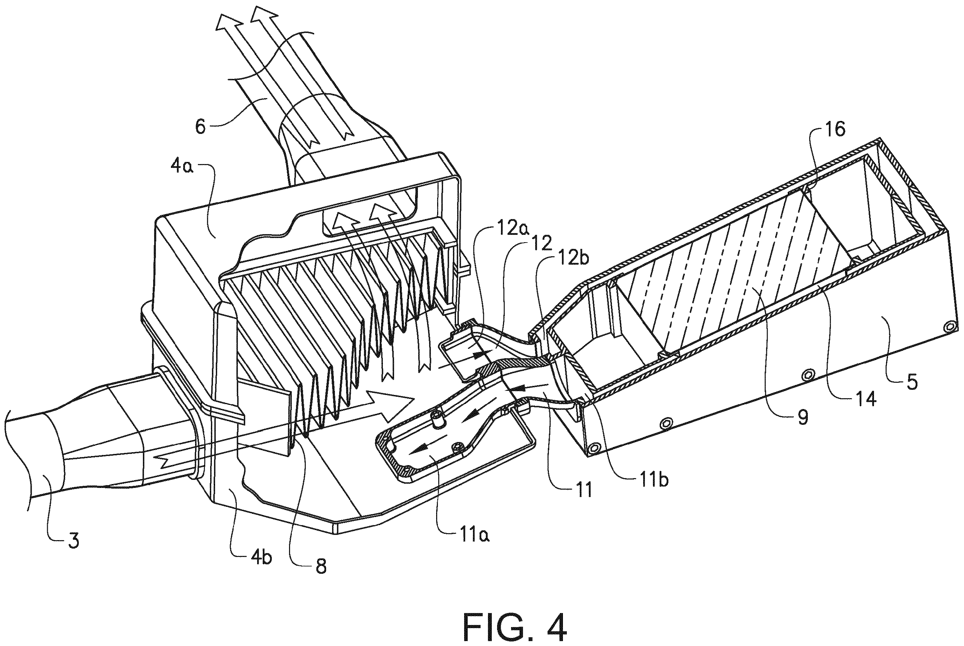

The system 1 is configured to allow combustion air to flow through the compartment 5 so as to provide air-cooling of the electric component 9. To achieve this, the compartment 5 is fluidly coupled in parallel to the air intake duct via a first conduit 11 (see e.g. figures 2-4) connected to the air filter box 4 at a first connection position 11 a (see figures 3 and 4) and a second conduit 12 (see e.g. figures 2-4) connected to the air filter box 4 at a second connection position 12a (see figures 3 and 4).

That the compartment 5 is fluidly coupled in parallel to the air intake duct means, for instance, that air can still flow through the intake duct to the engine 2 even if the flow through the conduits 11, 12 to the compartment 5 is blocked.

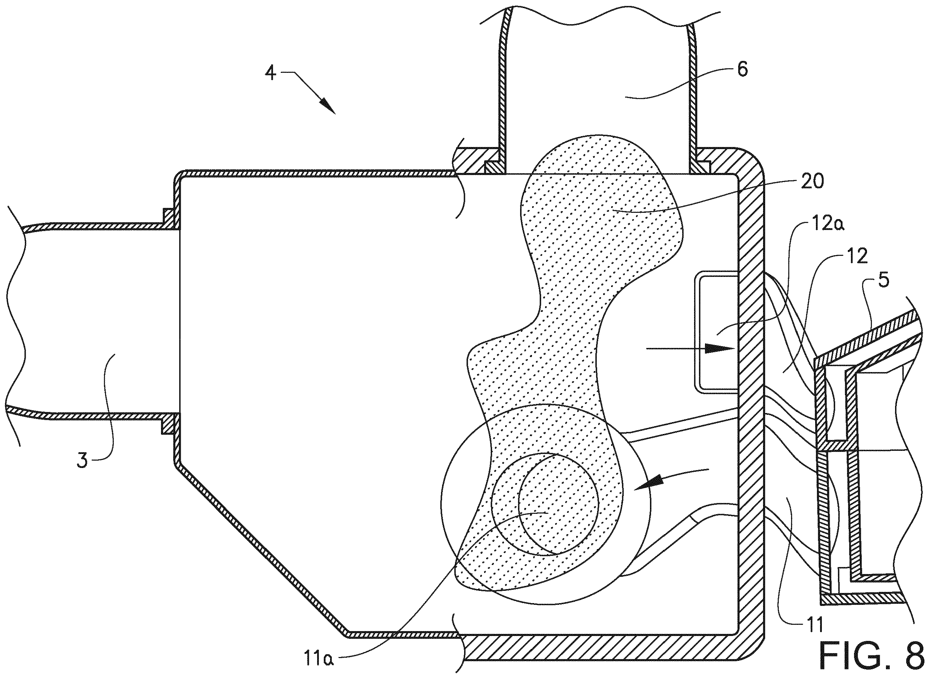

As will be further described in relation to figure 8, the air intake duct 3, 4, 6, in this case the air filter box 4, is configured to provide a difference in potential air pressure between said first and second connection positions 11 a, 12a during operation of the internal combustion engine 2. This pressure difference provides for an air flow through the compartment 5.

Figures 2 and 3 indicate electric connections 7a, 7b to the battery 9.

Figure 3 shows that the air filter box 4 comprises a releasable upper part 4a and a lower part 4b and that a folded air filter 8 is arranged roughly in the middle between the parts 4a and 4b. The inlet of the first duct 3 is arranged in the lower part 4b of the air filter box 4 and the outlet of the second duct 6 is arranged in the upper part 4b. This means that incoming combustion air that enters the filter box 4 via the first duct 3 must pass the filter 8 before exiting the filter box 4 via the second duct 6. Thus, only filtered and cleaned air reaches the internal combustion engine 2.

As shown in figures 3 and 4, the first conduit 11 extends from the first connection position 11 a, which in this example is an opening at the bottom of the air filter 4, to an opposite end opening 11 b in an outer wall of the compartment 5. The second conduit 12 extends from the second connection position 12a, which in this example is an opening at the bottom or side of the air filter 4 at a suitable location in relation to that of the first connection position 11 a, to an opposite end opening 12b in an outer wall of the compartment 5.

Both connection positions 11 a, 12a are arranged in the lower part 4b of the air filter box 4 so that also air that has flown through the compartment 5 (as will be further described below) will be filtered before reaching the engine 2. Thus, the air cooling system described here is arranged on the unfiltered "dirty" side of the air intake system 1. An advantage of this is that it is not necessary to keep the compartment 5 particularly clean.

A wall structure in the compartment 5, including walls/sides of the battery 9 itself, defines a channel 14, which extends along at least parts of the battery 9 to allow cooling and which connects the openings 11 b and 12b in the outer wall of the compartment 5, so that air that enters through one of the openings 11 b, 12b is guided along and around the battery 9 and out from the compartment 5 via the other opening 11 b, 12b.

Supporting flanges 16 holds the battery in place in the compartment 5 (figure 4).

The exact arrangement of the conduits 11, 12, the openings 11 a, 11 b, 12a, 12b and the cooling channel 14 can of course be designed in different ways depending on the application.

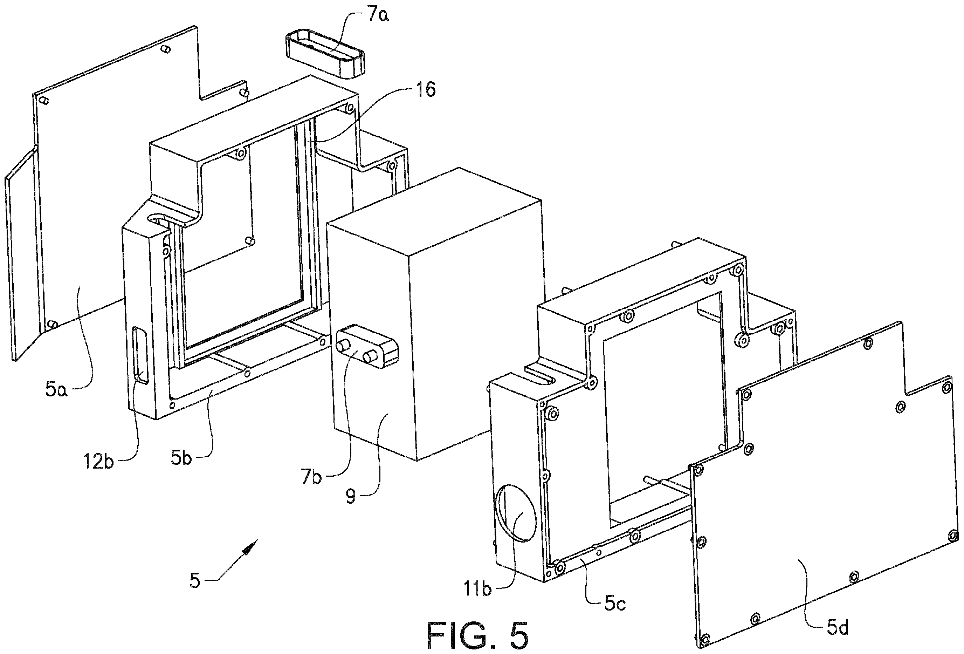

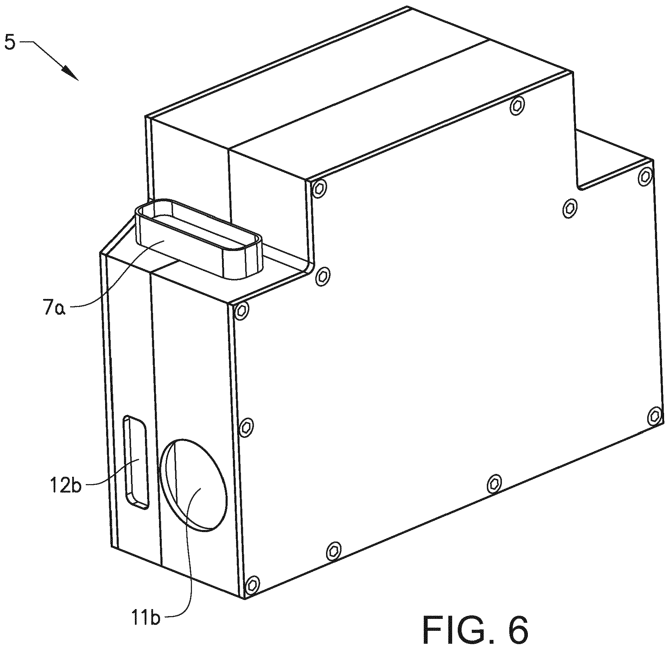

Figure 5 shows an exploded view of the compartment 5 with its parts 5a-5d that surrounds the battery 9 when assembled as shown in figure 6. The channel 14 for the flow of cooling air is formed when the compartment 5 is assembled.

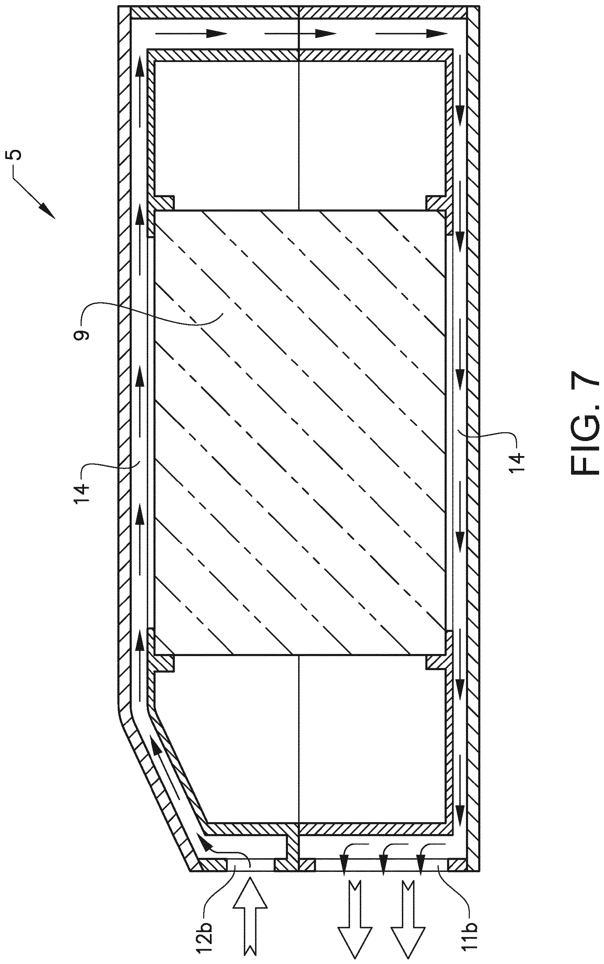

Figure 7 shows a sectional top view of the compartment 5 including the battery 9. Arrows indicate how cooling air in this example flows through the channel 14 from the inlet opening 12b to the outlet opening 11 b when the potential air pressure is lower at the first connection position 11 a (and thus in the first conduit 11) than in the second connection position 12a.

As shown in figure 7, the conduits 11, 12 and the compartment 5 (in this case the channel 14) are configured to force the flow of cooling air along the component 9 to be cooled when the cooling air passes through the compartment 5 from the second conduit 12 to the first conduit 11.

Figure 8 illustrates schematically, in a view from above, the distribution of potential pressure in the air filter box 4 during operation of the internal combustion engine 2. The dotted area 20 represents a volume of air having a lower potential pressure than the remaining (non-dotted) air in the air filter box 4. (The three-dimensional volume of air looks like a two-dimensional area in figure 8.)

Figure 8 shows (in a simplified way) that the potential air pressure is distributed in the filter box 4 in such a way that the pressure is lower (dotted area 20) at some places than in other places. In a real case the air pressure distribution is of course much more complex; here we limit the discussion to one volume of air that has a lower potential pressure than the surrounding air volume. The pattern of the pressure distribution and the pressure gradients are likely to vary with the operation condition of the engine 2. Figure 8 is intended to illustrate a typical operation condition of the engine 2. How the air pressure varies with the operation condition can be determined or at least estimated by computer simulation or testing.

In figure 8, the air volume indicated by the dotted area 20 has a certain depth and is at least partly located at the bottom of the air filter box 4 in contact with the first connection position 11 a.

By placing connection positions (openings) for fluidly connected conduits at suitable locations in the air intake system it is possible to create the flow of cooling air. As can be seen in figure 8, the air pressure is lower (dotted area) at the first connection position 11 a than at the second connection position 12a (non-dotted area). This pressure difference generates a flow of (cooling) air through the conduits 11, 12 (and the compartment 5) from the second connection position 12a to the first connection position 11 a. This flow will continue as long as the pressure difference is sufficient. By properly selecting the location of the connection positions, and perhaps by adjusting the design of a particular intake system, a flow of cooling air can be generated at all or most operation conditions of the engine 2.

The intake air flow can be adjusted to create an air pressure distribution that is suitable, or becomes even more suitable, for the arrangement described in this disclosure by, for instance, adjusting the inner shape of the air filter box 4. The air pressure distribution is suitable if there are two (or more) reasonably well separated locations created that exhibit a sufficient difference in potential air pressure during relevant (or all) operational modes of the engine. What can be considered to be a suitable air pressure distribution depends on the particular application. For instance, the required difference in air pressure, i.e. the driving force for the flow of cooling air, depends on the length and shape of the intended path for the cooling air flow. Further, the identified locations should be at places allowing for connection of conduits for the flow of cooling air.

The invention is not limited by the embodiments described above but can be modified in various ways within the scope of the claims. For instance, one or both of the first and second connection positions 11 a, 12a may, in principal, be arranged at another part of the intake duct, i.e. upstream or downstream the air filter box 4. An example of such a variant is to arrange both the connection positions 11 a, 12a downstream the air filter 8 so that both inlet and outlet of the cooling loop become located on the clean side of the intake system 1.

## Claims

1. Air intake system (1) for an internal combustion engine (2), said system comprising
- an air intake duct (3, 4, 6) configured to transport combustion air to the internal combustion engine (2),
- a compartment (5) configured to contain an electric component (9),
wherein the system (1) is configured to allow combustion air to flow through the compartment (5) so as to provide air-cooling of the electric component (9),
**characterized in**
**that** the compartment (5) is fluidly coupled in parallel to the air intake duct (4) via a first conduit (11) connected to the air intake duct (4) at a first connection position (11 a) and a second conduit (12) connected to the air intake duct (4) at a second connection position (12a),
wherein the air intake duct (4) is configured to provide a difference in potential air pressure between said first and second connection positions (11 a, 12a) during operation of the internal combustion engine (2).

2. Air intake system according to claim 1, wherein the first and second conduits and the compartment are configured to force a flow of cooling air to flow along and/or around the electric component when passing through the compartment on its way from the first conduit to the second conduit.

3. Air intake system according to any of the above claims, wherein the air intake duct comprises an air filter box, wherein at least one of the first and second connection positions is located in association with said air filter box.

4. Air intake system according to claim 3, wherein both the first and the second connection positions are located in association with said air filter box.

5. Air intake system according to claim 3 or 4, wherein both the first and the second connection positions are located at an upstream side of an air filter arranged in the air filter box.

6. Air intake system according to any of claims 3-5, wherein the air filter box has a cross sectional geometry that differs from that of the air intake duct upstream of the air filter box.

7. Air intake system according to any of the above claims, wherein the air intake duct comprises a bent part, wherein at least one of the first and the second connection positions is located in association with said bent part.

8. Air intake system according to any of the above claims, wherein the electric component is a battery.

9. Air intake system according to claim 8, wherein the battery is configured to power an electric motor capable of driving a vehicle.

10. Vehicle,
**characterized in**
**that** it comprises an air intake system according to any of the above claims.

11. Vehicle according to claim 10, wherein the vehicle comprises an internal combustion engine configured to drive the vehicle, wherein the air intake system is arranged to supply said internal combustion engine with combustion air.

12. Vehicle according to claim 11, wherein the vehicle comprises an electric motor configured for alternative or complementing driving of the vehicle, wherein the electric component to be air-cooled is a battery for powering the electric motor.
